Europäisches Patentamt

European Patent Office

Office européen des brevets

(11) Numéro de publication: **0 179 534**
**A2**

# (12) DEMANDE DE BREVET EUROPEEN

(21) Numéro de dépôt: **85201711.0**

(22) Date de dépôt: **21.10.85**

(51) Int. Cl.⁴: **F 24 D 3/00**

---

(30) Priorité: **22.10.84 CH 5050/84**

(43) Date de publication de la demande:
**30.04.86 Bulletin 86/18**

(84) Etats contractants désignés:
**AT BE DE FR GB IT LU NL SE**

(71) Demandeur: **Bousheri, Mehdi**
**453 Roberto Pastoriza**
**Saint Domingue(DO)**

(72) Inventeur: **Meflah, Kamel**
**625, Bd. Mohamed 5**
**Casablanca(MA)**

(72) Inventeur: **Boushehri, Mehdi**
**453, Roberto Pastoriza**
**Saint-Domingue(DO)**

(74) Mandataire: **Ardin, Pierre et al,**
**PIERRE ARDIN & CIE 22, rue du Mont-Blanc**
**CH-1211 Genève 1(CH)**

---

(54) **Installation de chauffage et de climatisation utilisant une pompe à chaleur.**

㊗ Installation comportant une vanne trois voies (9) sur la sortie du circuit d'eau du deuxième échangeur (3) pour diriger l'eau dans un circuit de chauffage (10) ou de dissipation de la chaleur (11). Installation comportant en outre un troisième échangeur (5) disposé entre l'entrée et la sortie du premier échangeur (1) et dont le circuit d'eau est relié au circuit de climatisation (12), une première électrovanne (6) placée sur l'entrée du premier échangeur (1) et une deuxième électrovanne (7) placée sur l'entrée du troisième échangeur (5).

EP 0 179 534 A2

./...

Croydon Printing Company Ltd

FIG.:1

## Installation de chauffage et de climatisation utilisant une pompe à chaleur

L'invention concerne une installation de chauffage et de climatisation utilisant une pompe à chaleur.

On connaît des appareils de chauffage à circuit fermé capable d'extraire de l'énergie calorifique d'une source thermique naturelle solaire ou autre.

Un appareil de ce type est connu par exemple du brevet français 2 488 682 qui comporte un premier échangeur de chaleur recevant l'énergie calorifique de la source thermique, un compresseur reliant le premier échangeur de chaleur à un deuxième échangeur qui fournit l'énergie calorifique au circuit de chauffage, le fluide comprimé par le compresseur se détendant dans une vanne de détente et allant se réchauffer dans le premier échangeur de chaleur avant de recommencer le cycle thermique.

Un tel dispositif n'est utilisable que pour le chauffage de locaux en période hivernale et ne peut assurer la climatisation en période estivale. Il est par conséquent nécessaire de prévoir une deuxième installation destinée au refroidissement. Cette solution est onéreuse par suite de la duplication obligatoire du matériel. Ainsi l'invention propose une installation susceptible d'assurer le chauffage et la climatisation avec une majorité d'éléments communs.

Les explications et figures données ci-après à titre d'exemple permettront de comprendre comment l'invention peut être réalisée :

La figure 1 représente schématiquement une installation conforme à l'invention, dans la fonction chauffage.

La figure 2 représente la même installation dans la fonction climatisation.

L'installation de chauffage et de

- 2 -

climatisation, utilisant une pompe à chaleur selon l'exemple de réalisation représenté, comporte un premier échangeur 1 constitué d'un panneau solaire dont la sortie est branchée sur l'admission d'un compresseur 2 qui envoie le fluide caloporteur comprimé et chaud dans un deuxième échangeur 3 où il cède ses calories à l'eau du circuit d'eau dudit échangeur qui alimente directement ou indirectement des appareils de chauffage, de stockage d'eau chaude ou des appareils d'évacuation de la chaleur dans l'atmosphère. Ce circuit sera ultérieurement décrit.

Le fluide caloporteur comprimé et froid sortant de l'échangeur 3 est détendu dans un détendeur thermostatique 4 puis passe dans le premier échangeur 1 où il est réchauffé avant de recommencer son cycle de compression-détente.

Afin de permettre l'utilisation de ce circuit classique de pompe à chaleur en circuit de climatisation, on a prévu à la sortie du détendeur 4 un troisième échangeur 5 dans lequel le fluide caloporteur détendu et froid passe avant de se rendre à l'entrée du compresseur 2. Dans cet échangeur, le fluide cède ses frigories à l'eau du circuit d'eau qui alimente des appareils de stockage ou de dissipation de l'eau refroidie.

Le fonctionnement en chauffage ou en climatisation est obtenu en mettant en circuit le premier échangeur 1 ou le troisième échangeur 5 par l'ouverture ou la fermeture des vannes 6 et 7 respectivement sur le circuit d'entrée du premier et du troisième échangeur.

Le circuit d'eau du deuxième échangeur 3 alimentant le circuit de chauffage et/ou de dissipation de chaleur 8 comporte à sa sortie une vanne trois voies 9 permettant de diriger l'eau soit sur un stockage d'eau chaude 10 alimentant par exemple des radiateurs, soit sur un aéroréfrigérant 11 ou autre circuit de dissipation de la chaleur dans le milieu ambiant plus froid.

-3-

Le circuit d'eau 12 du troisième échangeur 5 comporte un stockage d'eau refroidie 13 alimentant par exemple des appareils de climatisation de l'air.

Le mode de fonctionnement de l'installation ci-dessus décrite est le suivant :

On choisit le fonctionnement "chauffage" ou "climatisation" par mise sur l'une de ces positions d'un contacteur comportant des moyens pour la mise en ou hors circuit des éléments électriques ou électromagnétiques désignés ci-après sous la dénomination de vannes, de dispositif de contrôle de température et de détendeur.

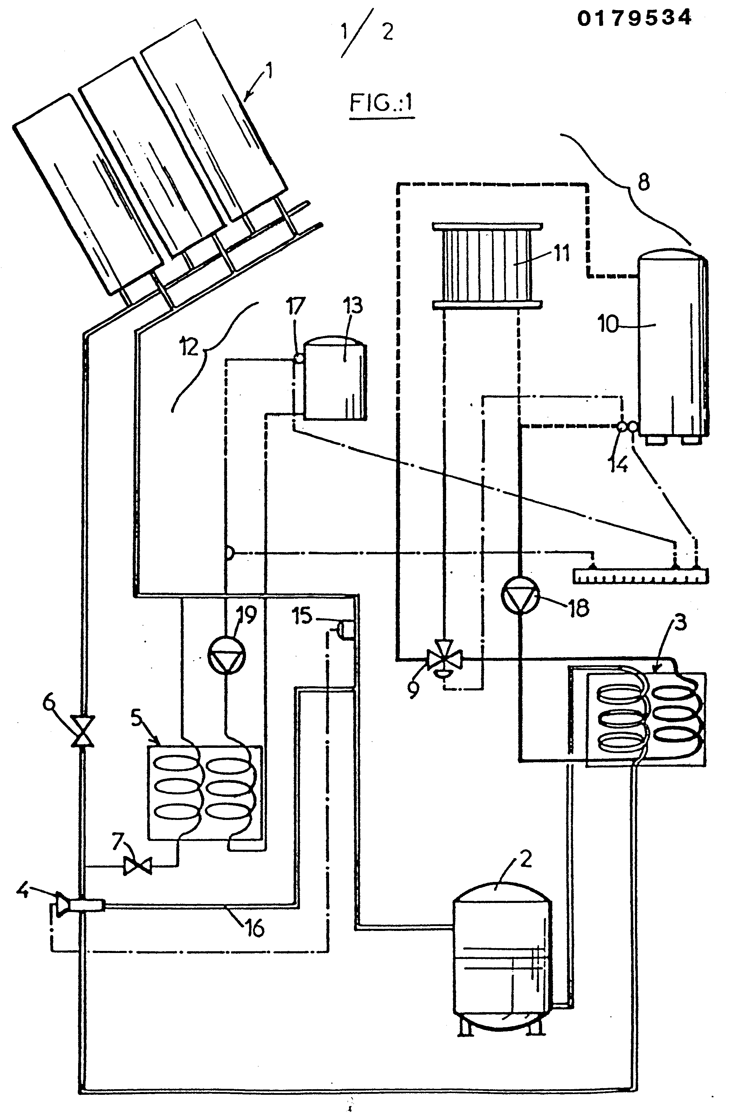

Sur la position chauffage (fig.1), (circuit représenté en double trait), la vanne trois voies 9 est au repos, le circuit d'eau de l'échangeur 3 étant relié au stockage d'eau chaude 10 ;

- la vanne 7, commandant le passage du fluide caloporteur détendu et froid dans le troisième échangeur 5, est au repos et fermée ;

- la vanne 6, commandant le passage du fluide caloporteur détendu et froid dans le premier échangeur 1, est mise en service de manière à suivre les arrêts démarrages du compresseur 2 ;

- le dispositif de contrôle 14 de la température du stockage d'eau chaude 10 est mis en service.

Lorsque la température de l'eau du stockage d'eau 10 est égale ou supérieure à la température de consigne du dispositif de contrôle 14, le compresseur 2 s'arrête et la vanne 6 est fermée. Le fluide caloporteur détendu et froid séjourne alors un temps plus ou moins long dans le panneau solaire 1 où il s'échauffe. Lorsque le dispositif de contrôle 14 détecte une température inférieure à la température de consigne, le compresseur 2 est mis en marche et la vanne 6 ouverte. Le compresseur 2 aspire le fluide caloporteur réchauffé par sa traversée ou son séjour dans le panneau solaire 1, et l'envoie après

- 4 -

compression, dans l'échangeur 3 où il cède sa chaleur au circuit de chauffage 8. Le fluide caloporteur est ensuite détendu dans le détendeur thermostatique 4 dont l'ouverture est commandée par un senseur 15 placé sur la canalisation d'entrée du compresseur 2. Le détendeur 4 contrôle la quantité de fluide caloporteur détendu et froid à envoyer au panneau solaire et détourne la partie du fluide non utilisée vers l'entrée du compresseur en aval du senseur 15 par un conduit de dérivation 16.

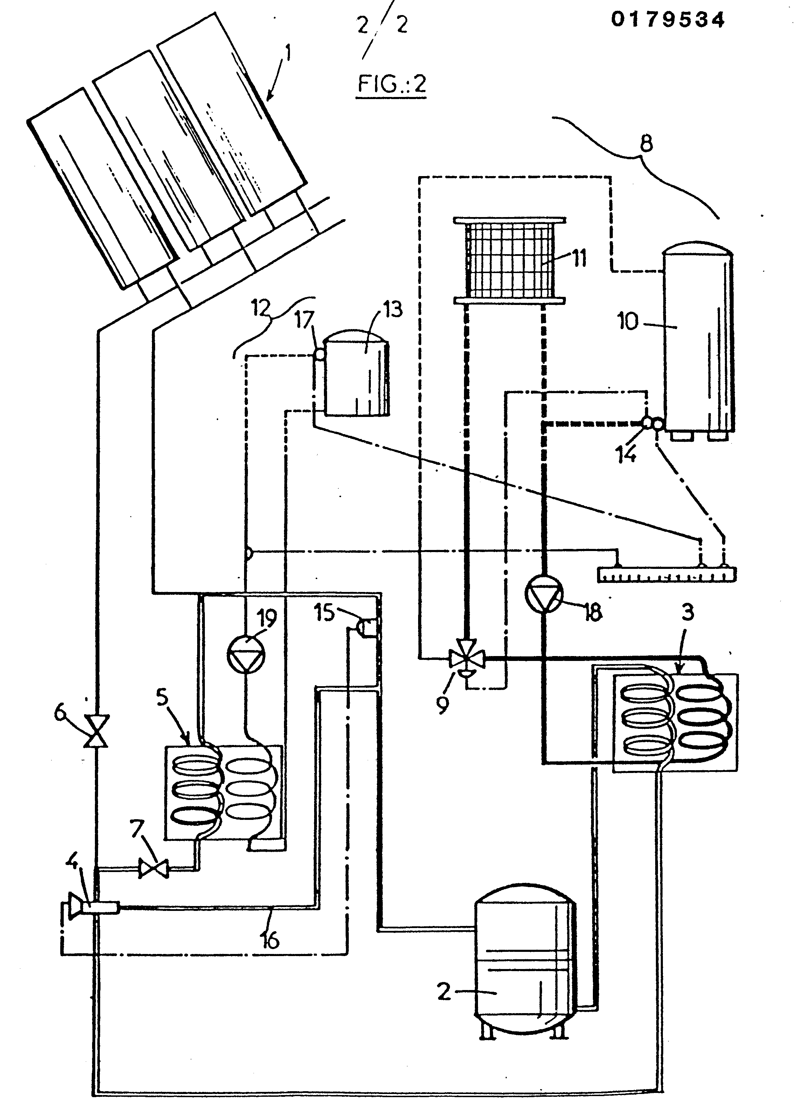

Sur la position "climatisation" (fig.2) (circuit représenté en double trait ), la vanne trois voies 9 est actionnée et le circuit d'eau de l'échangeur 3 est relié à l'aéroréfrigérant 11, le stockage d'eau chaude 10 étant mis hors circuit ;

- la vanne 6 est fermée mettant hors circuit le panneau solaire 1 ;

- la vanne 7 ,commandant le passage du fluide caloporteur détendu et froid vers le troisième échangeur 5 est mise en service de manière à suivre les arrêts démarrages du compresseur 2 ;

- le dispositif de contrôle 17 de la température du stockage d'eau glacée 13 est mis en service.

Lorsque la température de l'eau du stockage d'eau refroidie 13 est égale ou inférieure à la température de consigne du dispositif de contrôle 17, le compresseur 2 est arrêté et la vanne 7 fermée, il n'y a plus de circulation de fluide caloporteur dans l'échangeur 5. Lorsque le dispositif de contrôle détecte une température supérieure à la température de consigne, le compresseur 2 est mis en marche et la vanne 7 est ouverte.

Le compresseur 2 aspire le fluide caloporteur détendu qui a cédé ses frigories au circuit de stockage d'eau refroidie.

Après compression, le fluide passe dans l'échangeur 3 où il cède ses calories (dues à la compression)

-5-

au circuit de l'aéroréfrigérant 11. Le fluide caloporteur comprimé est détendu dans le détendeur 4, une partie du fluide détendu et froid passant directement par le conduit de dérivation 16, à l'entrée du compresseur 2, l'autre partie du fluide détendu et froid passe dans le troisième échangeur 5 et recommence son cycle de compression détente.

Selon une variante du fonctionnement en "climatisation" avec production d'eau chaude, le dispositif de contrôle 14 de la température du stockage d'eau chaude 10 est mis en service. La vanne trois voies 9 est ouverte et assure le passage de l'eau du deuxième échangeur 3 vers le stockage d'eau chaude 10. Lorsque la température détectée par le dispositif de contrôle 14 est supérieure à la température de consigne, il commande la vanne trois voies 9 qui envoie l'eau du circuit d'eau de l'échangeur dans le circuit de l'aéroréfrigérant 11 où il perd ses calories dans le milieu ambiant plus froid.

Les circuits d'eau de chauffage et d'eau refroidie comportent des circulateurs 18 et 19 qui permettent la circulation forcée de l'eau et sont mis en service, pour le circulateur d'eau de chauffage 18, lors des fonctionnements en "chauffage" et "climatisation" et, pour le circulateur d'eau refroidie 19 lors du fonctionnement en "climatisation".

On n'a pas représenté sur les schémas les vannes à pression constante, bouteille anti coup de liquide, receveur et autres éléments tous bien connus des spécialistes et qui ne présentent aucun intérêt pour l'invention.

Le premier échangeur, qui dans l'exemple de réalisation est un ou plusieurs panneaux solaires, peut être constitué par un échangeur en milieu liquide, la source naturelle de chaleur étant alors une nappe ou un

0179534

- 6 -

cours d'eau.

L'aéroréfrigérant 11 peut être remplacé par un circuit de dissipation de la chaleur tel qu'un échangeur en milieu liquide, l'eau en écoulement naturel ou forcé assurant la dissipation des calories.

- 1 -

REVENDICATIONS

1. Installation de chauffage et de climatisation utilisant une pompe à chaleur comprenant un premier échangeur parcouru par un fluide caloporteur extrayant de l'énergie calorifique d'une source thermique naturelle, dont la sortie est reliée à l'entrée d'un compresseur qui envoie le fluide comprimé dans un deuxième échangeur, dont le circuit d'eau est relié à un circuit de chauffage, puis dans un détendeur, le fluide détendu et froid étant dirigé dans le premier échangeur, caractérisé en ce qu'une vanne trois voies (9) est prévue sur la sortie du circuit d'eau du deuxième échangeur (3) pour la diriger dans un circuit de chauffage (10) ou de dissipation de la chaleur (11) et en ce que l'installation comporte un troisième échangeur (5) disposé entre l'entrée et la sortie du premier échangeur (1) et dont le circuit d'eau est relié au circuit de climatisation (12), une première électrovanne (6) placée sur l'entrée du premier échangeur (1) et une deuxième électrovanne (7) placée sur l'entrée du troisième échangeur (5).

2. Installation selon la revendication 1, caractérisée en ce qu'elle comporte un conduit de dérivation (16) du fluide caloporteur détendu et froid disposé entre le détendeur (4) et l'entrée du compresseur (2).

3. Installation selon la revendication 1, caractérisée en ce que le circuit de chauffage (10) comporte un dispositif de contrôle de la température (14) commandant la vanne trois voies (9).

4. Installation selon l'une des revendications précédentes, caractérisée en ce qu'il comporte un contacteur permettant le fonctionnement en "chauffage" par fermeture permanente de la vanne (7) commandant le passage du fluide caloporteur détendu et froid dans le troisième échangeur (5) et par fermeture et ouverture alternées de la  nne (6) commandant le passage du fluide caloporteur détendu et froid dans le premier échangeur (1) respectivement lors de la mise en marche et de l'arrêt du compresseur (2) ; et en "climatisation" par fermeture permanente de la vanne (6) commandant le passage du fluide caloporteur détendu et froid dans le premier échangeur (1) et par fermeture et ouverture alternées de la vanne (7) commandant le passage du fluide caloporteur détendu et froid dans le troisième échangeur (5) respectivement lors de l'arrêt ou de la mise en marche du compresseur (2).

0179534

FIG.:1

FIG.:2

0179534